# EUROPÄISCHE PATENTSCHRIFT

(11) **EP 1 456 574 B1**
(45) Veröffentlichungstag und Bekanntmachung des Hinweises auf die Patenterteilung: **06.09.2006**
(21) Anmeldenummer: 02790464.8
(22) Anmeldetag: 03.12.2002
(51) Int. Cl.: F16L 37/084

(54) **ANSCHLUSSSTÜCK FÜR FLUIDLEITUNGEN SOWIE DAMIT AUSGESTATTETES FLUIDTECHNISCHES GERÄT**
CONNECTION PIECE FOR FLUID LINES AND DEVICE EMBODIED THEREAS
ELEMENT DE RACCORDEMENT POUR CONDUITES DE FLUIDES ET APPAREIL FLUIDIQUE EQUIPE DE CE DERNIER

(30) Priorität: 20.12.2001 DE 10162657
(43) Veröffentlichungstag der Anmeldung: 15.09.2004
(73) Patentinhaber: FESTO AG & Co, 73734 Esslingen (DE)
(72) Erfinder: RÖHRIG, Harald, 66583 Spiesen-Elversbeg (DE)
(74) Vertreter: Abel, Martin
(86) Internationale Anmeldenummer: PCT/EP2002/013637
(87) Internationale Veröffentlichungsnummer: WO 2003/054434

(56) Entgegenhaltungen:
- EP-A- 0 723 103
- EP-A- 1 074 781
- DE-A- 10 005 870

## Beschreibung

Die Erfindung betrifft ein Anschlussstück für Fluidleitungen, ausgebildet zur Einpressmontage in einer Gehäuseausnehmung, mit einem in die Gehäuseausnehmung einsetzbaren Einsatz, der zumindest aus einem hülsenartigen Einsatzkörper sowie an diesem festgelegten, zum Festhalten der anzuschließenden Fluidleitung dienenden Haltemitteln besteht, und der ausgebildet ist, um durch Einpressmaßnahmen in der Gehäuseausnehmung fixiert zu werden, wobei zum Fixieren des in der Gehäuseausnehmung eingesetzten Einsatzes ein wenigstens einer entgegengesetzt zur Einsetzrichtung orientierten Abstützfläche des Einsatzes vorgelagerter, zum Einpressen in die Gehäuseausnehmung ausgebildeter separater Befestigungsring vorhanden ist. Die Erfindung betrifft ferner ein mit mindestens einem derartigen Anschlussstück ausgestattetes fluidtechnisches Gerät.

Ein derartiges Anschlussstück geht beispielsweise aus der DE-A-100 05 870 hervor, die einen Rohrverbinder mit einem Verbindungskörper beschreibt, der einenends eine Ausnehmung aufweist, in der Komponenten eines Anschlussstückes montiert sind. Diese Komponenten enthalten unter anderem ein als Haltemittel fungierendes Klemmelement und einen auf das Klemmelement aufgesteckten Spannring. Axial nach innen hin werden diese Teile von einem in die Ausnehmung eingerasteten Stopperelement und einem von dem Stopperelement gehaltenen Pufferelement fixiert. Für die Lagefixierung in entgegengesetzter Richtung ist ein Führungselement vorgesehen, das in die Ausnehmung eingepresst ist und im eingepressten Zustand mittels eines sich in der Wandung der Ausnehmung verkrallenden Vorsprunges gehalten wird.

Ein weiteres Anschlussstück geht aus der EP 0 723 103 B1 hervor. Dieses wird verwendet, um Fluidleitungen an fluidtechnische Geräte wie Ventile oder Antriebe anzuschließen. Das Anschlussstück wird durch Einpressmaßnahmen in der betreffenden Gehäuseausnehmung des fluidtechnischen Gerätes fixiert, so dass sich Schraubverbindungen erübrigen und kompakte Abmessungen möglich sind. Im Falle der EP 0 723 103 B1 enthält das Anschlussstück einen in die Gehäuseausnehmung einsetzbaren Einsatz, der einen hülsenartigen Einsatzkörper aufweist, an dem zum Festhalten der anzuschließenden Fluidleitung dienende Haltemittel fixiert sind. Die Einpressmaßnahmen sehen ein unmittelbares Einpressen des Einsatzkörpers in die Gehäuseausnehmung vor, wobei am Außenumfang des Einsatzkörpers vorgesehene vorsprungartige Verankerungsmittel in Verankerungseingriff mit der Wandung der Gehäuseausnehmung gelangen.

Die Einpressmontage hat zwar montagetechnische Vorteile, bereitet jedoch Probleme, wenn die mit einem Anschlussstück auszustattenden Geräte über unterschiedliche Gehäusematerialien verfügen. Bei Kunststoffgehäusen sollten die Verankerungsmittel des Einsatzkörpers möglichst stark ausgeprägt sein, um einen tiefen Materialeingriff zu gewährleisten. Im Zusammenhang mit Metallgehäusen sollten die Verankerungsmittel hingegen eher weniger stark ausgeprägt sein, da sonst die Gefahr besteht, dass sie beim Einpressen in die Gehäuseausnehmung abgeschert werden. Daher unterliegt die Ausgestaltung der Verankerungsmittel meist einem Kompromiss oder es müssen verschiedene Arten von Anschlussstücken bereitgestellt werden, bei denen die Einsatzkörper in ihrer Gestaltung jeweils spezifisch angepasst sind. Die erste Alternative kann zu Funktionsproblemen führen, die zweite Alternative bedingt einen relativ großen Herstellungs- und Kostenaufwand.

In der DE-U-200 20 052 wurde daher bereits vorgeschlagen, die Verankerungsmittel eines Einsatzkörpers zur Verankerung in Kunststoffmaterial auszulegen und bei der Bestückung von Metallgehäusen in der Gehäuseausnehmung vor dem Einpressen des Einsatzkörpers einen Kunststoffring zu verankern. Dies erfordert jedoch unterschiedliche Herstellungsvorgänge bei der Realisierung von Gehäuseausnehmungen in Kunststoffgehäusen und Metallgehäusen, was für den Fertigungsablauf ungünstig ist.

Es ist daher die Aufgabe der vorliegenden Erfindung, ein Anschlussstück zu schaffen, das sich in einer Gehäuseausnehmung ungeachtet der Materialbeschaffenheit der Gehäusewandung einfach und zuverlässig verankern lässt. Außerdem soll ein mit mindestens einem derartigen Anschlussstück ausgestattetes fluidtechnisches Gerät vorgeschlagen werden.

Zur Lösung der erwähnten Aufgabe ist bei einem Anschlussstück der eingangs genannten Art vorgesehen, dass der Einsatzkörper mit den Haltemitteln als Baueinheit ausgebildet ist, und dass der Befestigungsring mit dem Einsatzkörper eine schon vor dem Einsetzen in die Gehäuseausnehmung durch Aufstecken und Verrasten vormontierte Baugruppe bildet.

Die Aufgabe wird ferner gelöst durch ein beispielsweise als Ventil oder Antrieb ausgebildetes fluidtechnisches Gerät, das über mindestens eine Gehäuseausnehmung verfügt, in der ein solches Anschlussstück verankert ist.

Somit liegt eine funktionelle Trennung zwischen dem Festhalten einer anzuschließenden Fluidleitung und dem gehäuseseitigen Verankern des Anschlussstückes vor. Die Verankerung wird zwar weiterhin durch eine Einpressmaßnahme realisiert, bezieht sich jedoch nicht auf den in Baueinheit mit den Haltemitteln ausgebildeten Einsatzkörper, sondern auf einen zusätzlich vorgesehenen, separaten Befestigungsring. Dieser Befestigungsring kann in die Gehäuseausnehmung eingepresst werden, wobei er den in die Gehäuseausnehmung eingesetzten Einsatz an Ort und Stelle fixiert. Der Befestigungsring kann als verhältnismäßig einfaches Gebilde ausgeführt sein, das hinsichtlich der für die Einpressverbindung relevanten Gestaltung spezifisch auf das Wandungsmaterial der Gehäuseausnehmung abgestimmt ist, so dass man bei Bedarf in Abhängigkeit vom Gehäusematerial unterschiedliche Befestigungsringe verwenden kann, um ein und dieselbe standardisierte Art von Einsatz zu fixieren. Diejenigen Komponenten des Anschlussstückes, die einen relativ komplexen Aufbau haben und bei der Herstellung teure Werkzeuge erfordern, können somit standardisiert bereitgestellt werden, so dass lediglich die für die Verankerung zuständige Komponente anwendungsspezifisch gestaltet werden muss, was auf Grund der möglichen einfachen Bauart eine nicht unbeträchtliche Kosteneinsparung zur Folge hat.

Der Befestigungsring ist auf den Einsatzkörper aufsteckbar. Es besteht dadurch die Möglichkeit, den Befestigungsring mit dem Einsatzkörper schon vor dem Einsetzen in die Gehäuseausnehmung zu einer Baugruppe zusammenzufassen, so dass nachfolgend das Einsetzen des Einsatzes und das Einpressen des Befestigungsringes in ein und demselben Arbeitsgang stattfinden kann. In diesem Zusammenhang ist es von Vorteil, dass der Befestigungsring durch Verrastung am Einsatzkörper gehalten wird.

Vorteilhafte Weiterbildungen der Erfindung gehen aus den Unteransprüchen hervor.

Der Befestigungsring ist zweckmäßigerweise hülsenartig ausgebildet. Es lässt sich dadurch eine relativ große Einpresstiefe und folglich eine sichere Einpressverbindung vor allem auch in Fällen erzielen, bei denen die Gehäuseausnehmung einen sehr kleinen Querschnitt hat.

Kompakte Längenabmessungen des Anschlussstückes werden begünstigt, wenn der Befestigungsring den Einsatzkörper von der entgegen der Einsetzrichtung weisenden Vorderseite her entlang wenigstens eines Teils seiner Länge außen manschettenartig umschließt. Dabei kann der Befestigungsring auf einem im Durchmesser reduzierten Aufnahmeabschnitt des in Längsrichtung abgestuften Außenumfanges des Einsatzkörpers sitzen.

Um fluidtechnische Geräte rationell mit Anschlussstücken der erfindungsgemäßen Art ausstatten zu können, können zum einen gleich ausgebildete Einsätze und zum anderen hinsichtlich der für das Einpressen relevanten Mittel unterschiedlich ausgebildete Befestigungsringe bereitgestellt werden, wobei man die Befestigungsringe insbesondere entsprechend der Materialbeschaffenheit des Gehäuses des auszustattenden fluidtechnischen Gerätes auswählt und mit den Einsätzen kombiniert.

Um Beschädigungen des Einsatzkörpers beim Einpressen des Befestigungsringes zu verhindern, kann der Befestigungsring mit Anschlagmitteln ausgestattet sein, die die Einpresstiefe begrenzen. Diese Anschlagmittel können beispielsweise von einem radial nach außen vorstehenden Anschlagbund gebildet sein.

Die zum Festhalten einer eingesteckten Fluidleitung dienenden Haltemittel bestehen zweckmäßigerweise aus einem vorzugsweise insgesamt aus federelastischem Material bestehenden Haltering, der an seinem äußeren Rand am Einsatzkörper gehalten ist und über nach radial innen ragende, federelastisch biegbare Haltevorsprünge verfügt, die in der Lage sind, eine eingesteckte Fluidleitung am Außenumfang haltend zu beaufschlagen.

Zum Lösen der Halteverbinddung ist zweckmäßigerweise ein ringartig ausgebildetes Löseelement vorgesehen, das in den Einsatzkörper eintaucht und von außen her manuell betätigt werden kann, um die Haltemittel, insbesondere die Haltevorsprünge, außer Eingriff mit der Fluidleitung zu bringen.

Der Einsatzkörper besteht zweckmäßigerweise aus zwei durch Verschweißen oder einen sonstigen geeigneten Fügevorgang fest miteinander verbundenen Einsatzkörperteilen. Die Haltemittel sind zweckmäßigerweise zwischen diesen Einsatzkörperteilen, insbesondere in einer Ringnut, unverlierbar gehalten.

Zweckmäßigerweise beinhaltet der Einsatz auch einen am Einsatzkörper befestigten Dichtungsring. Der Dichtungsring hat zweckmäßigerweise eine Doppelfunktion und dient zum dichtenden Zusammenarbeiten mit dem Außenumfang der eingesteckten Fluidleitung und der Wandung der Gehäuseausnehmung.

Nachfolgend wir die Erfindung anhand der beiliegenden Zeichnung näher erläutert. In dieser zeigen:
- Figur 1: einen Ausschnitt eines fluidtechnischen Gerätes, das mit einer bevorzugten Bauform des erfindungsgemäßen Anschlussstückes ausgestattet ist, im Längsschnitt,
- Figur 2: die Anordnung aus Figur 1, wiederum in einer Längsschnittdarstellung, wobei das Anschlussstück in einer Position außerhalb einer Gehäuseausnehmung vor dem sich anschließenden Montagevorgang gezeigt ist, und
- Figur 3: das Anschlussstück gemäß Figuren 1 und 2, wiederum im Längsschnitt, in einer Explosionsdarstellung.

Die Zeichnung zeigt einen Ausschnitt des Gehäuses 1 eines in seiner Gesamtheit mit Bezugsziffer 2 bezeichneten fluidtechnischen Gerätes, das mit mindestens einem Anschlussstück 3 ausgerüstet ist, welches das lösbare, dichte Anschließen einer strichpunktiert angedeuteten Fluidleitung 4 ermöglicht.

Bei dem fluidtechnischen Gerät 1 handelt es sich beispielsweise um ein zur Steuerung von Fluidströmen dienendes Ventil oder um einen durch ein fluidisches Druckmittel betätigbaren Antrieb wie Linearantrieb oder Drehantrieb.

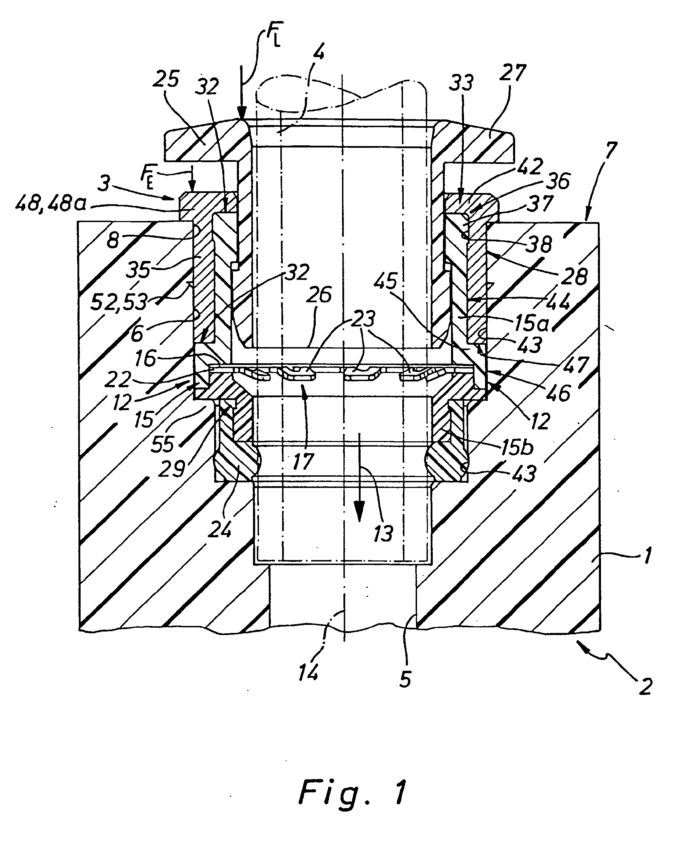

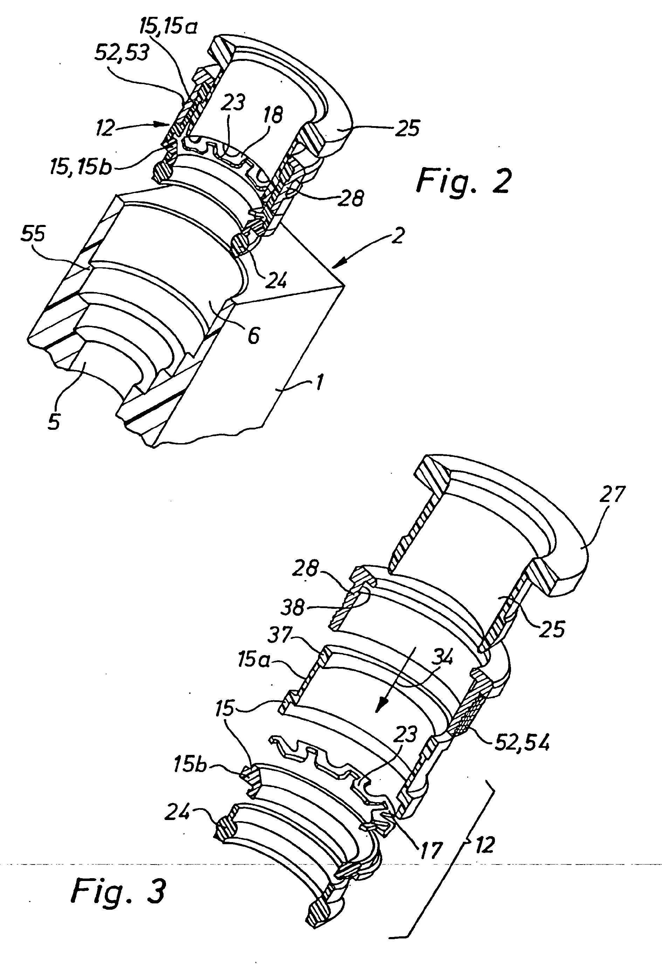

Im Gehäuse 1 des fluidtechnischen Gerätes 2 verlaufen in der Regel mehrere Fluidkanäle, von denen in Figuren 1 und 2 einer bei 5 ersichtlich ist. Durch diesen Fluidkanal 5 hindurch erfolgt die Zufuhr und/oder Abfuhr des beim Betrieb des fluidtechnischen Gerätes 2 verwendeten Druckmediums, insbesondere Druckluft. Der als Gehäuseausnehmung 6 bezeichnete Endabschnitt des Fluidkanals 5 mündet zur Außenfläche 7 des Gehäuses 1 aus. Die Mündung der Gehäuseausnehmung 6 ist bei 8 bezeichnet.

Eine Fluidleitung 4 kann in die Gehäuseausnehmung 6 eingesteckt werden, um die Fluidzufuhr und -abfuhr bezüglich des Fluidkanals 5 von außen her zu ermöglichen. Bei der Fluidleitung handelt es sich beispielsweise um einen Druckmittelschlauch.

Das Anschlussstück 3 ermöglicht ein sicheres Festhalten der eingesteckten Fluidleitung 4 bei gleichzeitiger Abdichtung gegen unerwünschten Fluidaustritt.

Das Anschlussstück 3 verfügt über eine Baugruppe, die in die Gehäuseausnehmung 6 durch einen Steckvorgang einsetzbar ist und als Einsatz 12 bezeichnet sei. Die Einsetzrichtung 13, die mit der Längsachse 14 der Gehäuseausnehmung 6 gleichgerichtet ist, ist bei 13 durch einen Pfeil verdeutlicht.

Der Einsatz 12 enthält einen hülsenartigen Einsatzkörper 15, der sich beim Ausführungsbeispiel aus zwei koaxial aufeinanderfolgend aneinandergesetzten Einsatzkörperteilen 15a, 15b zusammensetzt. Die Einsatzkörperteile sind fest und vorzugsweise unlösbar miteinander verbunden, insbesondere durch einen Schweißvorgang. Sie bestehen beide zweckmäßigerweise aus Kunststoffmaterial.

Im Übergangsbereich zwischen den beiden Einsatzkörperteilen 15a, 15b ist eine zur Innenumfangsfläche des Einsatzkörpers 15 hin offene Ringnut 16 definiert. In dieser sind Haltemittel 17 festgelegt, die zum Festhalten der eingesteckten Fluidleitung 4 dienen.

Bevorzugt handelt es sich bei den Haltemitteln 17 um einen aus federelastischem Material und insbesondere aus Federstahl bestehenden Haltering 18, der mit seinem äußeren Rand 22 in die Ringnut 16 eingreift und dadurch unverlierbar fixiert ist.

Der Haltering 18 verfügt über mehrere in seiner Umfangsrichtung verteilt angeordnete, radial nach innen ragende Haltevorsprünge 23. Zweckmäßigerweise haben die Haltevorsprünge 23 eine leichte Schrägstellung, wobei sie zu dem dem äußeren Rand 22 entgegengesetzten freien Ende hin schräg in Einsetzrichtung verlaufen. Die Haltevorsprünge 23, die insbesondere krallenartig konfiguriert sind, sind federelastisch biegbar.

Eine anzuschließende Fluidleitung 4 wird koaxial in den Einsatz 12 eingeführt und durch den Haltering 18 hindurch gesteckt. Ihr Außenumfang ist etwas größer als der von den freien Enden der Haltevorsprünge 23 begrenzte Innenumfang, so dass die Haltevorsprünge 23 ausgelenkt werden und mit der dadurch hervorgerufenen Rückstellkraft gegen den Außenumfang der Fluidleitung 4 drücken. Dadurch wird die Fluidleitung 4 gegen ein nachfolgendes Herausziehen gesichert.

An der in Einsteckrichtung 13 weisenden Rückseite des Einsatzkörpers 15 ist ein koaxial angeordneter Dichtungsring 24 befestigt. Die Befestigung kann beispielsweise durch eine Rastverbindung 29 erfolgen.

Bei dem Einsatz 12 handelt es sich mithin um eine Baugruppe aus den schon vor der Montage in der Gehäuseausnehmung 6 zusammengebauten Komponenten, als das sind der Einsatzkörper 15, die Haltemittel 17 und der Dichtungsring 24.

Bei der Montage des Anschlussstückes 3 in der Gehäuseausnehmung 6 wird der Einsatz 12 in dieser zusammengefügten Baueinheit eingesetzt. Alternativ wäre es jedoch auch möglich, den Dichtungsring 24 als separate Komponente auszubilden, die nicht zu dem Einsatz 12 gehört. Sie kann dann vorab in einem gesonderten Montageschritt in die Gehäuseausnehmung 6 eingelegt werden.

Zumindest umfasst der Einsatz 12 den beispielsgemäß aus zwei Einsatzkörperteilen 15a, 15b zusammengesetzten Einsatzkörper 15 und die daran insbesondere unlösbar befestigten Haltemittel 17.

Von der entgegen der Einsetzrichtung 13 orientierten Vorderseite her greift ein ringartig ausgebildetes Löseelement 25 koaxial in den Einsatzkörper 15 hinein. Es endet mit einem Beaufschlagungsende 26 vor dem zur Vorderseite des Einsatzkörpers 15 weisenden Rücken der Haltevorsprünge 23. Es ist relativ zu dem Einsatzkörper 15 in und entgegen der Einsetzrichtung 13 verstellbar. An einer vorderseitig außerhalb des Einsatzkörpers 15 liegenden Betätigungspartie 27 kann eine in Einsteckrichtung 13 orientierte Lösekraft F_{L} manuell aufgebracht werden, so dass das Löseelement nach innen geschoben wird und die Haltevorsprünge 23 derart beaufschlagt, dass diese vom Außenumfang der eingesteckten Fluidleitung 4 abgehoben werden. Eine zuvor eingesteckte Fluidleitung 4 kann nun problemlos wieder herausgezogen werden.

Der mit den Haltemitteln 17 ausgestattete Einsatz 12 kann in der Gehäuseausnehmung 6 durch Einpressmaßnahmen axial unbeweglich fixiert werden. Diese Einpressmaßnahmen bestehen darin, dass ein bezüglich des Einsatzes 12 separat ausgebildeter Befestigungsring 28 so in die Gehäuseausnehmung 6 eingepresst wird, dass er wenigstens einer entgegengesetzt zur Einsetzrichtung 13 des Einsatzes 12 orientierten Abstützfläche 32 vorgelagert ist und dadurch den Einsatz 12 an einer nachfolgenden Entnahme aus der Gehäuseausnehmung 6 hindert.

Beim Ausführungsbeispiel erfolgt das Einsetzen des Einsatzes 12 und das Einpressen des Befestigungsringes 28 in einem Arbeitsgang. Hierzu wird der zweckmäßigerweise hülsenartig ausgebildete Befestigungsring 28 bei noch nicht in die Gehäuseausnehmung 6 eingesetzten Einsatz 12 von der entgegen der späteren Einsetzrichtung 13 weisenden Vorderseite 33 des Einsatzes her auf den Einsatzkörper 15 koaxial aufgesteckt. Der Aufsteckvorgang ist in Figur 3 bei 34 durch einen Pfeil markiert. Im aufgesteckten Zustand, der aus Figuren 1 und 2 ersichtlich ist, wird der Einsatzkörper 15 von der Vorderseite 33 her entlang eines Teils seiner Länge von einem hülsenartigen Einpressabschnitt 35 des Befestigungsringes 28 manschettenähnlich umschlossen. In diesem Zustand stellen der Einsatz 12 und der Befestigungsring 28 eine vormontierte Baugruppe dar.

Um den aufgesteckten Befestigungsring 28 in axialer Richtung zu sichern, können wie abgebildet geeignete Rastmittel 36 vorgesehen sein. Beispielsweise verfügt der Einsatzkörper 15 am vorderen Endbereich radial außen über einen vorzugsweise umlaufenden Rastvorsprung 37, auf den der Befestigungsring 28 mit einer an seinem Innenumfang vorgesehenen Rastvertiefung 38 aufschnappen kann, wenn die gewünschte Aufsteckposition erreicht ist.

An dem Befestigungsring 28 ist zweckmäßigerweise ein dem Einsatzkörper 15 an der Vorderseite vorgelagerter Anschlagabschnitt 42 ausgebildet. Es handelt sich hier insbesondere um einen radial nach innen vor die vordere Stirnfläche des Einsatzkörpers 15 ragenden Radialvorsprung des Befestigungsringes 28, der insbesondere ringförmig gestaltet ist. Die erwähnte vordere Stirnfläche des Einsatzkörpers 15 bildet beim Ausführungsbeispiel eine der oben erwähnten Abstützflächen 32, über die der Befestigungsring 28 eine axiale Haltekraft auf den Einsatzkörper 15 ausüben kann.

Das auf diese Weise vormontierte Anschlussstück 3 wird sodann als Ganzes durch die Mündung 8 hindurch koaxial in die Gehäuseausnehmung 6 eingesetzt. Bei diesem Einsetzvorgang findet ein Einpressen des Befestigungsringes 28 in die Gehäuseausnehmung 6 statt. Die Einpresskraft F_{E} wird insbesondere über die entgegen der Einsteckrichtung 13 weisende vordere Stirnfläche des Beaufschlagungsringes 28 eingeleitet. Sofern das Löseelement 25 beim Einpressen bereits montiert ist, kann hierbei mit einem geeigneten Drückwerkzeug in den axialen Zwischenraum zwischen dem Befestigungsring 28 und der Betätigungspartie 27 des Löseelements 25 eingegriffen werden. Alternativ besteht auch die Möglichkeit, das Löseelement 25 erst dann einzusetzen, wenn der Einpressvorgang bereits beendet ist. Das Löseelement kann insbesondere verrastend in den Einsatzkörper 15 eingesteckt werden.

Der gewünschte Presssitz kann unter anderem dadurch gewährleistet werden, dass man den Befestigungsring 28 im Bereich des hülsenartigen Einpressabschnittes 35 mit geringfügig größerem Außenumfang versieht als den Innenumfang der Gehäuseausnehmung 6 im entsprechenden Bereich.

Im montierten Zustand kommt der im Innern der Gehäuseausnehmung 6 rückseitig am Einsatzkörper 15 angeordnete Dichtungsring in Dichtkontakt mit der Wandung 43 der Gehäuseausnehmung 6. Außerdem wird durch den Dichtungsring 24 die nachfolgend eingesteckte Fluidleitung 4 am Außenumfang mit Dichtkontakt umschlossen. Dadurch ist der Übergangsbereich zwischen Gehäuse 1 und Fluidleitung 4 sicher abgedichtet.

Bei dem bevorzugten Ausführungsbeispiel verfügt der Einsatzkörper 15 über einen in Längsrichtung abgestuften Außenumfang. Ausgehend von der Vorderseite 33 beginnt der Außenumfang mit einem Aufnahmeabschnitt 44, der den hülsenartigen Einpressabschnitt 35 des aufgesteckten Befestigungsringes 28 aufnimmt. An den Aufnahmeabschnitt 44 schließt sich, über eine Abstufung 45, ein Zentrierabschnitt 46 an. Der Zentrierabschnitt 46 hat einen größeren Außendurchmesser als der Aufnahmeabschnitt 44, wobei die radiale Höhe der Abstufung etwa der Dicke der Wandung des Einpressabschnittes 35 entspricht.

Der Einpressabschnitt 35 steht mit seiner in Einsteckrichtung 13 weisenden Stirnfläche 47 vorzugsweise in Kontakt mit der zugewandten Stirnfläche der Abstufung 45, so dass letztere eine weitere Abstützfläche 32 für den Befestigungsring 28 bilden kann. Die vom Befestigungsring 28 auf den Einsatzkörper 15 eingeleiteten axialen Haltekräfte können auf diese Weise optimal verteilt werden.

Der Außendurchmesser des Zentrierabschnittes 46 ist zweckmäßigerweise geringfügig kleiner als der vordere Längenabschnitt der Gehäuseausnehmung 6, der sich ausgehend von der Außenfläche 7 bis hin zu derjenigen Position erstreckt, die der Zentrierabschnitt 46 im eingesetzten Zustand des Einsatzkörpers 15 einnimmt. Dadurch wird erreicht, dass der Einsatzkörper 15 beim Einsetzen in die Gehäuseausnehmung 6 nicht radial zusammengedrückt wird und gleichzeitig ein exakt zentriertes Einsetzen in die Gehäuseausnehmung 6 möglich ist. Letzteres ist vor allem auch dann relevant, wenn man bei der Montage des Anschlussstückes 3 so vorgeht, dass man zunächst den Einsatz 12 in die Gehäuseausnehmung 6 einsetzt und erst dann den Befestigungsring 28 einpresst.

Der Befestigungsring 28 sitzt mit seinem hülsenartigen Einpressabschnitt 35 zweckmäßigerweise ohne Pressverbindung auf dem Einsatzkörper 15. Außerdem wird der Befestigungsring 28 hinsichtlich geometrischer und werkstofflicher Aspekte so ausgelegt, dass er auch im eingepressten Zustand keine radialen Kräfte auf den Einsatzkörper 15 überträgt. Dadurch ist insbesondere auch eine optimale Freigängigkeit des verschiebbaren Löseelements 25 gewährleistet.

Der Außenumfang des Einpressabschnittes 35 ist zweckmäßigerweise so gewählt, dass er geringfügig größer ist als derjenige des Zentrierabschnittes 46.

Um zu verhindern, dass der Einsatzkörper 15 beim Einpressen des Befestigungsringes 28 axial zerquetscht wird, sind am Befestigungsring 28 zweckmäßigerweise Anschlagmittel 48 zur Begrenzung der Einpresstiefe vorgesehen. Sie bestehen beim Ausführungsbeispiel aus einem Anschlagbund 48a, an der Vorderseite des Befestigungsringes 28, der radial nach außen vorspringt, so dass er im maximal eingepressten Zustand an der die Mündung 8 der Gehäuseausnehmung 6 umschließenden Randfläche des Gehäuses 1 zur Anlage gelangt.

Zur optimalen Verankerung des Anschlussstückes 3 in der Gehäuseausnehmung 6 ist der Befestigungsring 28 an der nach radial nach außen orientierten Außenfläche des Einpressabschnittes 35 mit vorsprungartigen Verankerungsmitteln 52 ausgestattet. Diese sind dazu vorgesehen, im eingepressten Zustand des Befestigungsringes 28 mit der Wandung 43 der Gehäuseausnehmung 6 in formschlüssigen Verankerungseingriff zu gelangen.

Gemäß der Darstellung in Figuren 1 und 2 handelt es sich bei den Verankerungsmitteln 52 um wenigstens einen und vorzugsweise genau einen Radialvorsprung 53, der einen zahnartigen Querschnitt haben kann und sich ringförmig über den gesamten Außenumfang des Einpressabschnittes 35 erstreckt. Bei Bedarf könnten auch mehrere mit axialem Abstand zueinander angeordnete Radialvorsprünge 53 dieser Art vorgesehen werden. Eine solche Ausgestaltung der Verankerungsmittel 52 empfiehlt sich, wenn das Gehäuse 1 insgesamt oder zumindest im Bereich der Wandung 43 der Gehäuseausnehmung 6 aus Kunststoffmaterial besteht. Dieses Material gibt beim Einpressen leichter nach, so dass eine rein kraftschlüssige Verbindung in der Regel nicht die gewünschte Festigkeit der Verbindung gewährleistet. Die Radialvorsprünge 53 können nun in das Gehäusematerial eingreifen und dadurch einen zusätzlichen formschlüssigen Verankerungseffekt hervorrufen. Da es sich bei dem Gehäuse 1 um ein Kunststoffgehäuse handelt, besteht auch keine Gefahr, dass die Radialvorsprünge 53 beim Einpressen des Befestigungsringes 28 abgeschert werden.

In Fällen, bei denen das Gehäuse 1, zumindest im Bereich der Wandung 43, aus relativ hartem Material besteht, insbesondere aus Metall, ist die Verwendung der erwähnten Radialvorsprünge 53 als Verankerungsmittel 52 nicht zu empfehlen. Sie können beim Einpressvorgang leicht abgeschert werden. Bei derartigen Anwendungen werden als Verankerungsmittel 53 insbesondere solche vorsprungsartige Erhebungen verwendet, die eine nur minimale Höhe aufweisen, die jedoch relativ großflächig über die Außenfläche des Einpressabschnittes 35 verteilt sind. Solche Verankerungsmittel können insbesondere in Gestalt einer Rändelung 54 ausgeführt sein, wie sie in Figur 3 angedeutet ist. Sie gewährleisten in Verbindung mit einem Metallgehäuse eine optimale Verankerung des eingepressten Befestigungsringes 28.

Auf Grund der bezüglich dem Einsatzkörper 15 separaten Ausgestaltung des Befestigungsringes 28 ist es problemlos möglich, gleichzeitig mehrere Befestigungsringe zur Verfügung zu stellen, die mit entsprechend dem Gehäusematerial angepassten unterschiedlichen Ausführungsformen von Verankerungsmitteln 52 versehen sind, wobei man einen Einsatz 12 von Fall zu Fall mit demjenigen Befestigungsring 28 kombiniert, der die für den Anwendungsfall günstigsten Verankerungsmittel 52 aufweist. Es versteht sich, dass in diesem Zusammenhang mehr als zwei unterschiedliche Arten von Befestigungsringen 28 zur Auswahl zur Verfügung gestellt werden können.

Zu dem Einsatzkörper 15 ist noch nachzutragen, dass dessen Einsetztiefe insbesondere durch wenigstens eine Abstufung 55 der Gehäuseausnehmung 6 vorgegeben wird. Diese Abstufung 55 befindet sich zweckmäßigerweise etwa im Bereich der Haltemittel 17.

## Patentansprüche

1. Anschlussstück für Fluidleitungen, ausgebildet zur Einpressmontage in einer Gehäuseausnehmung (6), mit einem in die Gehäuseausnehmung (6) einsetzbaren Einsatz (12), der zumindest aus einem hülsenartigen Einsatzkörper (15) sowie an diesem festgelegten, zum Festhalten der anzuschließenden Fluidleitung (4) dienenden Haltemitteln (17) besteht, und der ausgebildet ist, um durch Einpressmaßnahmen in der Gehäuseausnehmung (6) fixiert zu werden, wobei zum Fixieren des in die Gehäuseausnehmung (6) eingesetzten Einsatzes (12) ein wenigstens einer entgegengesetzt zur Einsetzrichtung (13) orientierten Abstützfläche (32) des Einsatzes (12) vorgelagerter, zum Einpressen in die Gehäuseausnehmung (6) ausgebildeter separater Befestigungsring (28) vorhanden ist, **dadurch gekennzeichnet, dass** der Einsatzkörper (15) mit den Haltemitteln (17) als Baueinheit ausgebildet ist, und dass der Befestigungsring (28) mit dem Einsatzkörper (15) eine schon vor dem Einsetzen in die Gehäuseausnehmung (6) durch Aufstecken und Verrasten vormontierte Baugruppe bildet.

2. Anschlussstück nach Anspruch 1, **dadurch gekennzeichnet, dass** der Befestigungsring (28) hülsenartig ausgebildet ist.

3. Anschlussstück nach Anspruch 1 oder 2, **dadurch gekennzeichnet, dass** der Befestigungsring (28) den Einsatzkörper (15) von der entgegen der Einsetzrichtung (13) weisenden Vorderseite (33) her entlang wenigstens eines Teils seiner Länge außen manschettenähnlich umschließt.

4. Anschlussstück nach Anspruch 3, **dadurch gekennzeichnet, dass** der Einsatzkörper (15) einen in Längsrichtung abgestuften Außenumfang besitzt, mit einem dem entgegen der Einsteckrichtung (13) weisenden vorderen Bereich zugeordneten Aufnahmeabschnitt (44) geringeren Durchmessers, auf den der Befestigungsring (28) aufsteckbar ist, und einem sich in der Einsetzrichtung (13) an den Aufnahmeabschnitt (44) anschließenden Zentrierabschnitt (46) größeren Durchmessers, der insbesondere zur Zentrierung in der Gehäuseausnehmung (6) vorgesehen ist.

5. Anschlussstück nach Anspruch 4, **dadurch gekennzeichnet, dass** die Dicke der Wandung des auf dem Aufnahmeabschnitt 44 sitzenden Längenabschnittes (35) des Befestigungsringes (28) zumindest in etwa der radialen Höhe der Abstufung (45) zwischen dem Aufnahmeabschnitt (44) und dem Zentrierabschnitt (46) entspricht.

6. Anschlussstück nach einem der Ansprüche 1 bis 5, **dadurch gekennzeichnet, dass** der Befestigungsring (28) einen im montierten Zustand des Anschlussstückes in der Gehäuseausnehmung (6) angeordneten Einpressabschnitt (35) aufweist, der am Außenumfang vorsprungsartige Verankerungsmittel (52) aufweist, die vorgesehen sind, um mit der Wandung (43) der Gehäuseausnehmung (6) in Verankerungseingriff zu gelangen.

7. Anschlussstück nach Anspruch 6, **dadurch gekennzeichnet, dass** zur Fixierung des Einsatzes (12) wahlweise unterschiedliche Befestigungsringe (28) vorgesehen sind, die sich zumindest in der Ausgestaltung der Verankerungsmittel (52) des Einpressabschnittes (35) unterscheiden.

8. Anschlussstück nach Anspruch 7, **gekennzeichnet durch** wenigstens zwei alternativ verwendbare Befestigungsringe (28), dessen einer zur Verankerung in der Gehäuseausnehmung (6) eines Metallgehäuses und dessen anderer zur Verankerung in der Gehäuseausnehmung (6) eines Kunststoffgehäuses ausgebildet ist.

9. Anschlussstück nach Anspruch 8, **dadurch gekennzeichnet, dass** der zur Verankerung in einem Metallgehäuse vorgesehene Befestigungsring (28) über von einer Rändelung (54) gebildete Verankerungsmittel (52) und der zur Verankerung in einem Kunststoffgehäuse vorgesehene Befestigungsring (28) über von wenigstens einem umlaufenden Radialvorsprung (53) gebildete Verankerungsmittel (52) verfügt.

10. Anschlussstück nach einem der Ansprüche 1 bis 9, **dadurch gekennzeichnet, dass** eine Abstützfläche (32) von der entgegen der Einsetzrichtung (13) weisenden vorderen Stirnfläche des Einsatzkörpers (15) gebildet ist.

11. Anschlussstück nach einem der Ansprüche 1 bis 10, **dadurch gekennzeichnet, dass** am Befestigungsring (28) Anschlagmittel (48) zur Begrenzung der Einpresstiefe vorgesehen sind.

12. Anschlussstück nach einem der Ansprüche 1 bis 11, **dadurch gekennzeichnet, dass** der Befestigungsring (28) einen zur Anlage an der die Mündung (8) der Gehäuseausnehmung (6) umschließenden Randfläche des mit der Gehäuseausnehmung (6) versehenen Gehäuses (1) vorgesehenen Anschlagbund (48a) aufweist.

13. Anschlussstück nach einem der Ansprüche 1 bis 12, **dadurch gekennzeichnet, dass** die Haltemittel (17) einen Haltering (18) aufweisen, der an seinem äußeren Rand (22) am Einsatzkörper (15) gehalten ist und über nach radial innen ragende, federelastisch biegbare Haltevorsprünge (23) verfügt, die vorgesehen sind, eine zum Zwecke ihres anschließend eingesteckte Fluidleitung (4) am Außenumfang zu beaufschlagen.

14. Anschlussstück nach einem der Ansprüche 1 bis 13, **gekennzeichnet durch** ein ringartig ausgebildetes Löseelement (25) das von der entgegen der Einsetzrichtung (13) weisenden Vorderseite (33) her koaxial in den Einsatzkörper (15) eingreift und das mit den Haltemitteln (17) zusammenwirken kann, um eine eingesteckte Fluidleitung (4) zur Entnahme freizugeben.

15. Anschlussstück nach einem der Ansprüche 1 bis 14, **dadurch gekennzeichnet, dass** der Einsatzkörper (15) zwei durch Verschweißen oder einem sonstigen Fügevorgang fest miteinander verbundene, axial aufeinanderfolgend angeordnete Einsatzkörperteile (15a, 15b) aufweist, zwischen denen die Haltemittel (17) unverlierbar gehalten sind.

16. Anschlussstück nach einem der Ansprüche 1 bis 15, **gekennzeichnet durch** einen an der in Einsetzrichtung (13) weisenden Rückseite des Einsatzkörpers (15) festgelegten Dichtungsring (24), der insbesondere vorgesehen ist, um zum einen mit dem Außenumfang einer eingesteckten Fluidleitung (4) und zum anderen mit der Wandung (43) der Gehäuseausnehmung (6) dichtend zusammenzuarbeiten.

17. Fluidtechnisches Gerät, insbesondere Ventil oder Antrieb, mit mindestens einer Gehäuseausnehmung (6), in der ein gemäß einem der Ansprüche 1 bis 16 ausgebildeten Anschlussstück (3) verankert ist.

## Claims

1. Connecting piece for fluid lines, designed for press-fitting in a housing recess (6), with an insert (12) capable of insertion in the housing recess (6) and comprising at least a sleeve-like insert body (15) together with retaining means (17) fixed to the former and serving to hold the connected fluid line (4) in place, and which is designed to be fixed in the housing recess (6) by press-fit measures, wherein there is provided for fixing the insert (12) inserted in the housing recess (6) a separate fastening ring (28) designed for press-fitting in the housing recess (6) and mounted in front of at least one support surface (32) of the insert (12) oriented in the direction of insertion (13), **characterised in that** the insert body (15) together with the retaining means (17) form a unit, and that the fastening ring (28) and the insert body (15) form a sub-assembly pre-assembled by pushing on and locking before insertion in the housing recess (6).

2. Connecting piece according to claim 1, **characterised in that** the fastening ring (28) is sleeve-like in form.

3. Connecting piece according to claims 1 or 2, **characterised in that** the fastening ring (28) encloses the insert body (15) externally in the manner of a sleeve, from the front side (33) facing away from the direction of insertion (13) along at least part of its length.

4. Connecting piece according to claim 3, **characterised in that** the insert body (15) has an outer periphery which is stepped longitudinally, with a locating section (44) of smaller diameter assigned to the front section facing away from the direction of insertion (13), on to which the fastening ring (28) may be fitted, and a centring section (46) of greater diameter adjoining the locating section (44) in the direction of insertion (13) and provided in particular for centring in the housing recess (6).

5. Connecting piece according to claim 4, **characterised in that** the thickness of the wall of the length section (35) of the fastening ring (28) resting on the locating section (44) corresponds at least approximately to the radial height of the step (45) between the locating section (44) and the centring section (46).

6. Connecting piece according to any of claims 1 to 5, **characterised in that** the fastening ring (28) has a press-fit section (35), located in the housing recess (6) in the fitted state of the connecting piece, which has on its circumference projection-like anchoring means (52) which are provided to engage for anchoring purposes with the wall (43) of the housing recess (6).

7. Connecting piece according to claim 6, **characterised in that** for fixing the insert (12), different alternative fastening rings (28) are provided, differing at least in the form of the anchoring means (52) of the press-fit section (35).

8. Connecting piece according to claim 7, **characterised by** at least two alternative fastening rings (28), one designed for anchoring in the housing recess (6) of a metal housing and the other designed for anchoring in the housing recess (6) of a plastic housing.

9. Connecting piece according to claim 8, **characterised in that** the fastening ring (28) provided for anchoring in a metal housing has anchoring means (52) formed by a knurl (54), and the fastening ring (28) provided for anchoring in a plastic housing has anchoring means (52) provided by one or more continuous radial projections (53).

10. Connecting piece according to any of claims 1 to 9, **characterised in that** a support surface (32) is formed by the end face of the insert body (15) facing away from the direction of insertion (13).

11. Connecting piece according to any of claims 1 to 10, **characterised in that** the fastening ring (28) is provided with stop means (48) to limit the depth of insertion.

12. Connecting piece according to any of claims 1 to 11, **characterised in that** the fastening ring (28) has a stop shoulder (48a) to fit up against the boundary face, surrounding the orifice (8) of the housing recess (6), of the housing (1) provided with the housing recess (6).

13. Connecting piece according to any of claims 1 to 12, **characterised in that** the retaining means (17) have a retaining ring (18) which is held at its outer edge (22) on the insert body (15) and which has spring-elastic, flexible retaining projections (23) extending radially inwards which are provided to act on the outer periphery of a fluid line (4) inserted for the purpose of its connection.

14. Connecting piece according to any of claims 1 to 13, **characterised by** a an annular release element (25) which engages coaxially in the insert body (15) from the front side (33) facing away from the direction of insertion (13), and which is able to interact with the retaining means (17) in order to release an inserted fluid line (4) for removal.

15. Connecting piece according to any of claims 1 to 14, **characterised in that** the insert body (15) has two axially consecutive insert body sections (15a, 15b), permanently joined together by welding or another joining process, between which the retaining means (17) are held captive.

16. Connecting piece according to any of claims 1 to 15, **characterised by** a seal ring (24) fixed to the rear of the insert body (15) facing in the direction of insertion (13) and provided in particular to cooperate in sealing on the one hand with the outer periphery of an inserted fluid line (4) and on the other hand with the wall (43) of the housing recess (6).

17. Fluidic device, in particular a valve or drive, with at least one housing recess (6) in which is anchored a connecting piece (3) formed in accordance with one of claims 1 to 16.

## Revendications

1. Élément de raccordement pour des conduites de fluide, conçu pour un montage par enfoncement dans un logement (6), comportant un insert (12), qui est apte à être inséré dans le logement (6) et est formé par au moins un corps (15) en forme de manchon, ainsi que des moyens de retenue (17), fixés à celui-ci et destinés à maintenir la conduite de fluide (4) à raccorder, et qui est réalisé pour être fixé par enfoncement dans le logement (6), pour lequel, pour la fixation de l'insert (12) inséré dans le logement (6), il est prévu une bague de fixation (28) séparée, conçue pour être enfoncée dans le logement (6) et montée devant au moins une face d'appui (32) de l'insert (12), orientée à l'encontre du sens d'insertion (13), **caractérisé en ce que** le corps d'insert (15) est réalisé avec les moyens de retenue (17) sous la forme d'une unité, et **en ce que** la bague de fixation (28) avec le corps d'insert (15) forme un groupe préfabriqué par enfichage et blocage déjà avant l'introduction dans le logement (6).

2. Élément de raccordement selon la revendication 1, **caractérisé en ce que** la bague de fixation (28) est réalisée sous forme de douille.

3. Élément de raccordement selon la revendication 1 ou 2, **caractérisé en ce que** la bague de fixation (28) entoure de l'extérieur à la manière d'une manchette le corps d'insert (15) le long d'au moins une partie de sa longueur depuis la face avant (33) orientée à l'encontre du sens d'insertion (13).

4. Élément de raccordement selon la revendication 3, **caractérisé en ce que** le corps d'insert (15) présente un contour extérieur étagé dans le sens longitudinal, comportant une partie de réception (44) de plus petit diamètre, qui est associée à la zone avant orientée à l'encontre du sens d'insertion (13) et sur laquelle est emmanchée la bague de fixation (28), et une partie de centrage (46) de plus grand diamètre, qui est adjacente dans le sens d'insertion (13) à la partie de réception (44) et qui est prévue en particulier pour le centrage dans le logement (6).

5. Élément de raccordement selon la revendication 4, **caractérisé en ce que** l'épaisseur de la paroi de la partie longitudinale (35) de la bague de fixation (28), placée sur la partie de réception (44), correspond au moins sensiblement à la hauteur radiale du décrochement (45) entre la partie de réception (44) et la partie de centrage (46).

6. Élément de raccordement selon l'une des revendications 1 à 5, **caractérisé en ce que** la bague de fixation (28) comporte une partie insérable (35) qui, à l'état monté de l'élément de raccordement, est située dans le logement (6) et qui comporte sur son pourtour extérieur des moyens d'ancrage (52) formant des saillies, qui sont prévus pour entrer en prise avec la paroi (43) du logement (6).

7. Élément de raccordement selon la revendication 6, **caractérisé en ce que**, pour la fixation de l'insert (12), il est prévu au choix différentes bagues de fixation (28), qui se différencient au moins par la conception des moyens d'ancrage (52) de la partie insérable (35).

8. Élément de raccordement selon la revendication 7, **caractérisé par** au moins deux bagues de fixation (28) utilisables en alternance, dont l'une est réalisée pour l'ancrage dans le logement (6) d'un boîtier métallique et dont l'autre est conçue pour l'ancrage dans le logement (6) d'un boîtier en matière plastique.

9. Élément de raccordement selon la revendication 8, **caractérisé en ce que** la bague de fixation (28) prévue pour l'ancrage dans un boîtier métallique comporte des moyens d'ancrage (52) formés par un moletage (54) et la bague de fixation (28) prévue pour l'ancrage dans un boîtier en matière plastique comporte des moyens d'ancrage (52) formés par au moins une saillie radiale (53) périphérique.

10. Élément de raccordement selon l'une des revendications 1 à 9, **caractérisé en ce qu'**une surface d'appui (32) est formée par la face frontale avant du corps d'insert (15), orientée à l'encontre du sens d'insertion (13).

11. Élément de raccordement selon l'une des revendications 1 à 10, **caractérisé en ce que** des moyens de butée (48), destinés à limiter la profondeur d'introduction, sont prévus sur la bague de fixation (28).

12. Élément de raccordement selon l'une des revendications 1 à 11, **caractérisé en ce que** la bague de fixation (28) comporte un collet de butée (48a), prévu pour venir en appui contre le bord du boîtier (1) muni du logement (6), lequel bord entoure la bouche (8) du logement (6).

13. Élément de raccordement selon l'une des revendications 1 à 12, **caractérisé en ce que** les moyens de retenue (17) comportent une bague de retenue (18), qui est maintenue au niveau de son bord extérieur (22) contre le corps d'insert (15) et qui comporte des saillies de retenue (23) élastiquement flexibles en saillie dans le sens radial vers l'intérieur, lesquelles sont prévues pour coopérer avec le pourtour extérieur d'une conduite de fluide (4) insérée ultérieurement.

14. Élément de raccordement selon l'une des revendications 1 à 13, **caractérisé par** un élément de déverrouillage (25) qui s'engage coaxialement dans le corps d'insert (15) depuis la face avant (33) orientée à l'encontre du sens d'insertion (13) et qui peut coopérer avec les moyens de retenue (17) pour débloquer une conduite de fluide (4) insérée, en vue de son démontage.

15. Élément de raccordement selon l'une des revendications 1 à 14, **caractérisé en ce que** le corps d'insert (15) comporte deux parties (15a, 15b), qui sont juxtaposées dans le sens axial et reliées fermement entre elles par soudage ou un autre processus d'assemblage et entre lesquelles sont maintenus de manière imperdable les moyens de retenue (17).

16. Élément de raccordement selon l'une des revendications 1 à 15, **caractérisé par** une bague d'étanchéité (24), qui est fixée sur la face arrière du corps d'insert (15), orientée dans le sens d'insertion (13), et qui est prévue en particulier pour coopérer de manière étanche, d'une part, avec le pourtour extérieur d'une conduite de fluide (4) insérée et, d'autre part, avec la paroi (43) du logement (6).

17. Dispositif pour la technique des fluides, en particulier vanne ou système d'entraînement, comportant au moins un logement (6), dans lequel est ancré un élément de raccordement (3) réalisé selon l'une des revendications 1 à 16.
